# EUROPÄISCHE PATENTSCHRIFT

(11) **EP 3 104 744 B1**
(45) Veröffentlichungstag und Bekanntmachung des Hinweises auf die Patenterteilung: **01.07.2020**
(21) Anmeldenummer: 15706368.6
(22) Anmeldetag: 12.02.2015
(51) Int. Cl.: A47B 47/00, F16B 12/12, F16B 12/46

(54) **PRÄSENTATIONSMÖBEL FÜR WAREN**
PIECE OF DISPLAY FURNITURE FOR DISPLAYING GOODS
MEUBLE DE PRÉSENTATION DE MARCHANDISES

(30) Priorität: 12.02.2014 DE 202014100622 U
(43) Veröffentlichungstag der Anmeldung: 21.12.2016
(73) Patentinhaber: Linden, Michael, 21368 Boitze (DE)
(72) Erfinder: Linden, Michael, 21368 Boitze (DE)
(74) Vertreter: Weeg, Thomas
(86) Internationale Anmeldenummer: PCT/EP2015/000310
(87) Internationale Veröffentlichungsnummer: WO 2015/120985

(56) Entgegenhaltungen:
- CN-U- 202 732 567

## Beschreibung

Die vorliegende Erfindung betrifft ein Möbel, insbesondere ein Präsentationsmöbel, vorzugsweise ein Präsentationsmöbel für Waren, weiter bevorzugt ein modular aufbaubares Möbel in Form eines Regals oder Schranks, umfassend eine Mehrzahl an Möbelelementen in Form von Flächen- und Verbindungselementen, die an Schmalseiten der Flächenelemente ansetzbar sind.

Möbel für Waren, insbesondere Messeregalsysteme, sind im Stand der Technik hinreichend bekannt. Exemplarisch seien hier die DE 10 109 590 B4 sowie die US 6,553,724 B1 genannt. Die DE 101 09 590 B4 beschreibt einen Ausstellungsstand aus vertikal und horizontal angeordneten stabförmigen Grundelementen mit Längsnuten, in deren Verhakungsquerschnitt Verbindungselemente wie Verbindungszapfen verschieblich einzusetzen sind. Magnetstreifen an den Grundelementen ermöglichen es, Displays anzubringen.

Die US 6,553,724 B1 zeigt ein Bausystem für Präsentationsgestelle, bei dem jeweils ein Flächenelement über eine Nut- und Feder-Verbindung mit jeweils einem Verbinder zusammenzustecken sind. Die Federelemente sind dabei als Magnet-Metallbänder vorgesehen. Zur Herstellung einer Verbindung mit einem weiteren Flächenelement weist der Verbinder Verhakungsprofile mit hinterschnittenen Nuten und passenden Profilstegen auf, mit dem zwei Verbinder der Länge nach zusammengeschoben und ineinander verhakt werden können.

Obgleich es auch nach dem Stand der Technik auf eine einfache Zusammenbaubarkeit eines Ausstellungsstandes ankommt, ist die Vielzahl der verwendeten Teile und insbesondere die Verbindung der über Eck oder nebeneinander anzuordnenden Flächenelemente, beispielsweise zur Ausbildung eines Faches, noch immer vergleichsweise hoch. Zusätzlich müssen Schraubverbindungen gelöst oder befestigt werden, und es sind eine Vielzahl von die Verbindung ausbildenden Verbindungselementen miteinander in zu kombinieren und zu verbinden.

Ein gattungsgemäßes Möbel ist aus der CN 202732567 (U) bekannt, bei der modular aufbaubare Möbel mit Flächenelementen aus Strang-Profilplatten mit zu den Schmalseiten hin offenen Hohlkammern winklig mit Verbindungselementen zusammenzusetzen sind, die mit zapfenartigen Fortsätzen in die Hohlkammern eingreifen und dort durch Verriegelungselemente zu sichern sind, die durch Öffnungen nahe der Schmalseiten der Flächenelemente eingesetzt werden. Damit sind Boxen zusammenzusetzen, die mit anderen Boxen aneinandergereiht oder gestapelt werden können. Die Position der Boxen untereinander ist durch Magnete zu stabilisieren, die in den zapfenartigen Fortsätzen gelagert sind.

Es ist daher Aufgabe der vorliegenden Erfindung, ein insbesondere als (z.B. auf Messen einsetzbares) Präsentationsmöbel verwendbares Möbel, vorzugsweise nach Art eines Schrankes oder eines Regals, hinsichtlich seiner Handhabung zu vereinfachen und gleichwohl eine Vielzahl unterschiedlicher Gestaltungsmöglichkeiten zu ermöglichen.

Die Aufgabe wird gelöst durch einen Gegenstand gemäß Anspruch 1. Vorteilhafte Ausgestaltungen der Erfindung sind den auf diesen Anspruch rückbezogenen Unteransprüchen sowie der nachfolgenden Figurenbeschreibung zu entnehmen.

Ein erfindungsgemäßes Möbel für Waren, insbesondere ein modular aufbaubares Möbel in Form eines Regals oder Schranks zeichnet sich dadurch aus, dass es eine Mehrzahl an Möbelelementen in Form von Flächen- und Verbindungselementen aufweist, wobei die Verbindungselemente an Schmalseiten der Flächenelemente ansetzbar sind, wobei die werkzeuglos lösbare Verbindung an den Schmalseiten über eine in eine Nutstruktur einzuführende Federstruktur, vorzugsweise über eine in eine Nut einzuführende Feder oder über eine in eine zumindest als Doppel-Nut ausgebildete Mehrfach-Nut einzuführende zumindest als Doppel-Feder ausgebildete Mehrfach-Feder, erfolgt und wobei die Möbelelemente über diese Nut-Feder-Verbindung quer zur flächigen Erstreckung des Flächenelements sowie zusätzlich entgegen der Einführrichtung über die Wechselwirkung wenigstens eines auf Seiten des einen Möbelelements angeordneten Magneten und eines auf Seiten des angrenzenden Möbelelements angeordneten magnetisch anziehbaren weiteren Teils festgelegt sind, dergestalt, dass zwei nebeneinander oder unmittelbar über Eck angeordnete Flächenelemente entlang der kürzesten Verbindung zueinander über nur (genau) ein Verbindungselement verbunden sind. Dies umfasst auch Varianten, bei denen mehrere Verbindungselemente nebeneinander, d.h. an ihre Stirnseiten aneinander anschließend zur Abdeckung der Stirnfläche bzw. Schmalseiten eines Flächenelements angeordnet sind. Ein solches Möbel oder Möbelstück kann neben sowohl im Privatbereich, z.B. als Regal oder Schrank im Wohn- oder Schlafzimmer, wie auch im gewerblichen Bereich eingesetzt werden. Insofern ergeben sich Anwendungsmöglichkeiten z.B. im Messe- oder Ladenbau oder im Bürobereich.

Werkzeuglos bedeutet hierbei insbesondere für eine das Möbel aufbauende Personen, dass diese die einzelnen Elemente des Möbels manuell zusammenzufügen und außerdem manuell lösen kann. Die Verbindung erfolgt über die Nutstruktur bzw. Federstruktur angrenzender Verbindungs- und Flächenelemente, die zusätzlich über einen Magneten und dessen Gegenpart aneinander gezogen sind. Diese Verbindung ist über die Reibung der Federstruktur in der Nutstruktur, insbesondere der Mehrfach-Feder in der Mehrfach-Nut, sowie über die magnetische Wechselwirkung ausreichend fest für den Aufbau von Möbeln üblicher Größen. Es versteht sich, dass in der Regel eine Mehrfach-Nut so viele Nuten, wie die Mehrfach-Feder Federn umfasst, aufweist, allerdings kann auch in eine beispielsweise als 4-Fach-Nut ausgebildete Mehrfach-Nut eine als Doppel-Feder ausgebildet Mehrfach-Feder eingreifen.

Unter einer Doppel-Nut werden zwei sich insbesondere parallel in Richtung der Längserstreckung des Möbelelements erstreckende Nuten verstanden. Analog ist eine Doppel-Feder durch zwei sich in Längsrichtung des Möbelelements erstreckende Federn, z.B. in Form von Stegen gebildet. Sowohl die Nutstruktur als auch die Federstruktur können teilweise unterbrochen sein, z.B. um die Anordnung weiterer Möbelelemente zu ermöglichen. Statt genau zwei Federn oder Nuten aufzuweisen umfasst die Erfindung auch Ausführungsbeispiele, mit Mehrfach-Nuten oder - Federn, d.h. Varianten, die drei oder mehr nebeneinander befindliche Nuten oder Federn aufweisen. Im einfachsten Fall kann die Nutstruktur nur eine ggf. unterbrochene Nut und die Federstruktur dann entsprechend nur eine ggf. unterbrochene Feder aufweisen. Die Einführrichtung ist eine Richtung parallel zur flächigen Erstreckung des Flächenelements und insbesondere senkrecht auf einer Stirnseite des Flächenelements.

Vorzugsweise ist sowohl auf Seiten des Verbindungselements wie auch auf Seiten des Flächenelements ein Magnet angeordnet. Bei diesem kann es sich beispielsweise um Neodymmagneten handeln.

Insbesondere weisen die Magnete eine geringere Querschnittsbreite auf als das Verbindungselement. Dies hat den Vorteil, dass die Flächen- und Verbindungselemente über einen weiten Bereich in- und aneinander entlang geschoben werden können, ohne dass sich durch die vorzugsweise zylinderförmig ausgebildeten Magneten bereits Anziehungskräfte ergeben. Diese wirken erst in der näheren Umgebung der Magneten zueinander, was den Aufbau des Möbels im Vergleich zum Stand der Technik, bei dem leistenförmige Magnete vorhanden sind, erheblich erleichtert.

Vorzugsweise weist das Verbindungselement auf zumindest einer Seite eine Federstruktur, vorzugsweise eine Mehrfach-Feder, auf. Auf wenigstens einer weiteren Seite kann ein weiteres Verbindungsmittel zum Beispiel zum Anordnen einer Glasscheibe oder auch eine weitere Federstruktur, insbesondere eine Mehrfach-Feder, vorhanden sein. Während die Mehrfach-Feder, die in eine korrespondierende Mehrfach-Nut eines angrenzenden Möbelelements eingreift, generell auch auf Seiten des Flächenelements vorhanden sein kann, hat die Anordnung der Mehrfach-Feder auf Seiten des Verbindungselements den Vorteil, dass die Verbindungselemente dann hinsichtlich der im zusammengebauten Zustand sichtbaren Teile schmaler gebaut werden können.

Zwecks einer besseren Einführbarkeit in die vorzugsweise mit Mehrfach-Nuten versehenen Stirnseiten eines Flächenelements ist eine Doppel-Feder bzw. sind die beiden einzelnen Federn der Doppel-Feder zu ihren Enden hin abgeschrägt. Gleiches gilt auch für etwaige Mehrfach-Federn bzw. eine einzelne Feder einer Federstruktur.

Vorteilhafterweise ist das Verbindungselement mit einem eckigen, insbesondere quaderförmigen Grundkörper versehen, wobei der Grundkörper im Querschnitt quer zu seiner Längserstreckung sowie bezüglich einer Umhüllenden, vorzugsweise quadratisch ausgebildet ist. Als Grundkörper wird hierbei der Körper des Verbindungselements ohne beispielsweise die Federstruktur wie insbesondere die Mehrfach-Federn verstanden. Für eine symmetrische Anbindung von mit dem Verbindungselement zu verbindenden Flächenelementen sowohl über Eck wie auch nicht über Eck ist es vorteilhaft, dass der Grundkörper, der vorzugsweise aus Holz, Kunststoff oder Aluminium ausgebildet ist, quadratisch ist. Das Verbindungselement kann mit Ausnahme der zugehörigen Magneten und dessen z.B. auf Klebstoff basierenden Beschichtung ebenfalls aus Holz, Kunststoff oder Aluminium hergestellt und ggf. zuzüglich lackiert, gebeizt oder anders veredelt sein. Hieraus ergibt sich eine angenehme Haptik, geringe Herstellungskosten und eine einfache Ver- und Bearbeitbarkeit. Alternativ kann der Grundkörper auch aus MDF und einem anderen Verbundmaterial, insbesondere einem Holz-Kunststoff-Verbundmaterial hergestellt sein. Die Flächenelemente können ergänzend mit Fotodruck versehene Bespannungen oder Beklebungen in Form von Folien oder dünnen Faserplatten aufweisen. Diese können beispielsweise auch über Rast- oder Hakenverbindungen (z.B. Klettverbindungen) auf die Flächenelemente aufgebracht werden. Beispielsweise kann ein Flächenelement auch lediglich einen Rahmen für eine Bespannung ausbilden und mit einer Bespannung versehen sein. Die Flächenelemente können genauso wie die Verbindungselemente zumindest im Wesentlichen (Ausnahme Magnete) aus Holz, Holzverbundstoffen, Metall, Kunststoff oder aus einem oder mehreren dieser Materialien bestehenden Verbundstoffen wie z.B. Holzverbundstoffe oder WPC (Wood-Plastic-Composite) bestehen. Die einzelnen Teile des erfindungsgemäßen Möbels können aus Rohmaterial herausgearbeitet hergestellt oder auch über Spritz- oder Gußtechnik hergestellt werden. Insbesondere über eine Bambus-Spritzgußtechnik ergibt sich eine gute Kombination aus Haptik und Festigkeit bei gleichzeitig präziser Fertigung.

Für die Anbindung eines Flächenelements an ein weiteres Flächenelement ist das Verbindungselement auf den jeweils den Stirnseiten des Flächenelements zugewandten Seiten mit einer Federstruktur, insbesondere einer Mehrfach-Feder, versehen und/oder der Magnet auf der jeweiligen Seite des Verbindungselements ist symmetrisch zu der Federstruktur, d.h. insbesondere mit seiner Längsmittelachse mittig zwischen den Federn bei einer geraden Anzahl von Federn der Federstruktur, angeordnet. Somit weist das Verbindungselement zumindest auf zwei Seiten eine Federstruktur auf. Bei einer Anordnung von drei oder vier Flächenelementen an dem Verbindungselement sind entsprechend auf drei oder vier Seiten Federstrukturen in Form von vorzugsweise Mehrfachfedern vorhanden.

Aufgrund der symmetrischen Anordnung des Magneten zu den Mehrfach-Federn, beispielsweise in dem Zwischenraum zwischen zwei Federn einer Doppel-Feder ist das Ansetzen des Verbindungselements seitenunabhängig durchführbar. Dies gilt insbesondere für Magnete, die bezüglich eines Grundelements in der Mitte angeordnet sind.

Die Länge der Verbindungselemente kann ebenso wie die Länge der Flächenelemente variieren. Wesentlich ist hierbei, dass die Abstände der Magnete von den Außenseiten bzw. außenseitigen Stirnflächen so bemessen sind, dass sie zu den gegengesetzten Magneten am Verbindungspartner passen.

Ein Basisverbinder weist eine Länge D = A - V auf, wobei V die Querschnittsbreite eines weiteren Verbindungselements ist. Abhängig von den Ausgestaltungen des Verbinders kann dieser die Längen A - V, A oder A+V aufweisen, wobei ein Verbinder der Länge A + V bei der Verbindung mit einem Flächenelement an beiden Ende an den Bereich mit Federn angrenzende überstehende Endbereiche aufweist, wobei die Überstände entsprechend so groß sind, dass ein Flächenelement auf allen Seiten von einem Rahmen aus Verbindungselementen eingefasst sein kann.

Das nächst längere Verbindungselement weist entsprechend dieser Längenfunktion zunächst eine Länge von 2A - V, 2A oder 2A + V auf, je nach dem ob es vorbezeichnete Endbereiche aufweist, die Stirnseiten angrenzenden Verbindungselemente überdecken.

Das kleinste Verbindungselement weist ebenfalls nur einen Magneten auf, der mittig angeordnet ist. Bei dem nächst längeren Verbindungselement sind entsprechen dann zwei Magnete vorhanden, wobei die Federstruktur, insbesondere die Mehrfach-Feder, hierbei mittig oder um 1/2V versetzt unterbrochen ist, um zumindest in etwa auf der Hälfte des Verbindungselements ansetzende weitere Flächenelemente zu ermöglichen.

Die Kantenlänge der Flächenelemente ergibt sich hierbei zu 1A - V für eine in der Draufsicht quadratische Platte (Basiselement), die als kleinste Modulgröße dann auf allen vier Seiten mit einer Nutstruktur, insbesondere mit einer Mehrfach-Nut, versehen ist. Nächst längere Flächenelemente sind dann 2A - V, 3A - V und 4A - V (n?A-V, mit ganzzahligen n=1,2,3,4,5,...). In dem als Basiselement verwendbaren Flächenelement sind in den Schmalseiten vorhandene Magnete zentral, bezüglich der Nutstruktur, insbesondere der Mehrfach-Nuten, symmetrisch und von den Ecken gleich weit beabstandet angeordnet. Die nächstgrößeren Varianten weisen dann auf einer Schmalseite entsprechend der vorstehenden Regel n Magnete auf.

Vorzugsweise ist der Magnet beim Verbindungselement in den Grundkörper eingelassen, wobei er bündig mit der umgebenden Oberfläche abschließen kann. Insbesondere ist der Magnet in einem Bereich eingelassen, in dem auf Seiten des Verbindungselements Stege dicht anbeistehen. Es kann daher vorteilhaft sein, dass um den Magneten herum die insbesondere als Doppelfeder ausgebildete Nutstruktur bzw. Mehrfach-Feder zum Magneten hin verlaufende Ausnehmungen aufweist, wobei insbesondere die die Ausnehmung ausbildenden Nut-Oberflächen als Führungsflächen ausgebildet ist, so dass ein weiterer Magnet, der auf Seiten des Flächenelements angeordnet ist, zum Magneten hingeführt wird bzw. das Verbindungs- oder Abschlusselement genau zum Magneten des Flächenelements positioniert wird. Entsprechend sind die (z.B. Doppel-)Federn unterbrochen und nicht notwendigerweise als durchgängige oder nur als teilweise mit verringerter Höhe durchgängige Stege ausgebildet.

Ergänzend können im Anschluss an die Führungsflächen hohlzylindrische Einlaufbereiche vorhanden sein, deren Durchmesser nur geringfügig größer ist als die Breite von zylinderförmig ausgebildeten Magneten (< 3 mm Unterschied).

Weiterhin gereicht es dem erfindungsgemäßen Möbel zum Vorteil, wenn das Verbindungselement mit einer Ausnehmung versehen ist, in der eine stromführende Leitung angeordnet ist.

Die Funktionalität des erfindungsgemäßen Möbels ist weiterhin verbessert, wenn auf zumindest einer der Stirnseiten des Verbindungselements Anschlussmittel zur Verbindung mit einer stromführenden Leitung vorhanden sind. Hierbei kann es sich insbesondere um Klemmen oder Stecker handeln.

Vorzugsweise sind eines oder mehrere der Möbelelemente mit einem vorzugsweise als LED-Leiste ausgebildeten Leuchtmittel versehen. Entsprechend kann der Ausstellungsraum beleuchtet werden. Insbesondere handelt es sich bei diesem Möbelelement um ein noch weiter unten beschriebenes Abschlusselement, welches den vom Betrachter aus hinter dem Abschlusselement befindlichen Raum ausleuchtet, so dass die Beleuchtung des Ausstellungsgegenstandes von Seiten des Betrachters und somit vorteilhaft für dessen Betrachtung erfolgt.

Wie bereits vorbeschrieben ist das Verbindungselement als über Eck vorgesehenes Verbindungsmittel zweier Flächenelemente mit jeweils auf einander angrenzenden Seiten befindlichen Federstruktur, insbesondere Mehrfach-Federn, versehen. Über Eck bezeichnet in der Regel eine 90°-Ecke, es können jedoch auch im Querschnitt polygonale Verbindungsmittel vorgesehen sein, die Flächenelemente mit Winkeln größer oder kleiner 90° verbinden. Bei mit bündig ineinander übergehenden Oberflächen versehenen Flächenelementen, die entsprechend nebeneinander angeordnet sind, ist zur Verbindung dieser beiden Flächenelemente das Verbindungselement mit auf gegenüberliegenden Seiten befindlichen Mehrfach-Federn versehen.

Für die Integration einer Tür oder Klappe kann das Verbindungselement mit einem Beschlag für eine solche versehen sein. Zwecks einer verbesserten Drehmomentaufnahme kann das Verbindungselement, welches dann mit einem Beschlag versehen ist, zusätzlich mit einem weiteren Verbindungselement verstiftet sein, wozu entsprechende Ausnehmungen zu Anordnung eines Stifts in den Verbindungselementen vorhanden sein können.

Wie vorbeschrieben weist ein Flächenelement insbesondere eine eckige, vorzugsweise eine quaderförmige Grundform auf, wobei die vorbeschriebenen Längenbeziehungen geltend.

Die Dicke des Flächenelements entspricht der Querschnittsbreite eines Grundkörpers eines Verbindungselements. Entsprechend passen die einzelnen Verbindungselemente und Flächenelemente austauschbar an jeweils weitere Verbindungspartner.

Wie vorbeschrieben weist das Flächenelement vorzugsweise eine Nutstruktur, insbesondere eine Mehrfach-Nut, auf wenigstens einer, insbesondere jedoch auf allen seinen Stirn- bzw. Schmalseiten auf. Diese Nutstruktur, insbesondere Mehrfach-Nuten, können insbesondere bis zu den Ecken der Flächenelemente verlaufen.

Vorzugsweise ist ein zentraler, zwischen den Nuten befindlicher Steg mit einem Magneten versehen, der von der Höhe her mit dem Steg bündig ausgebildet sein kann. Dieser Steg kann von der Formgebung her eine komplementäre Form zu einer zwischen z.B. den Doppel-Federn des Verbindungselements verlaufenden Nut aufweisen.

Der Magnet ist insbesondere breiter als der Steg ausgebildet, d.h. er erstreckt sich somit im Vergleich zum Rest des Steges stärker in den von den Nuten ausgebildeten Raum hinein. In Kombination mit einem Einlaufbereich auf Seiten des Verbindungselements kann eine solche Ausführungsform zu einer einfacheren Anpassung und einem zielgenauen Positionieren der Präsentation zu Möbelelemente führen. Das Verbindungselement kann in der magnetisch gehaltenen Position in Abhängigkeit von der Breite des Magneten nicht in Längsrichtung des zwischen den Stegen des Verbindungselements befindlichen Kanals verrutschen. Das Verbindungselement ist somit in alle drei Raumrichtungen gehalten. Bei einer Federstruktur mit nur einer in Längsrichtung betrachtet kann es vorteilhaft sein, wenn der Magnet auch eine geringere Breite aufweist.

Die Funktionsvielfalt eines erfindungsgemäßen Möbels ist weiterhin verbessert, wenn das Flächenelement zumindest teilweise durchsichtig ausgebildet ist. Alternativ oder ergänzend kann ein Möbelelement eine Nut und/oder eine Ausnehmung zur Anordnung eines Funktionselements, insbesondere einer Glasplatte, einer mit einer Folie bespannten weiteren Platte, eines Monitors oder dergleichen flächig die Ausnehmung füllenden Funktionselements aufweisen.

Ein weiteres Möbelelement des erfindungsgemäßen Möbels ist als ein Abschlusselement ausgebildet, welches auf einer zu einem Betrachter hin zu richtenden Seite nut- und federlos ausgebildet ist. Insbesondere an der vom Betrachter aus als Frontseite zu definierenden Vorderseite wird durch ein solches Abschlusselement das mit einem Nut- oder Federprofil ausgebildete Flächenelement abgedeckt. Wie vorbeschrieben kann ein solches Abschlusselement insbesondere auch Beleuchtungsmittel aufweisen.

Vorzugsweise ist das Abschlusselement wie auch ein Verbindungselement mit einer Federstruktur, insbesondere einer Mehrfach-Feder, versehen, die zu den Enden der Feder hin insbesondere abgeschrägt ist, um eine Anordnung auf Gehrung in den Eckbereichen des eines Flächenelements zu ermöglichen. Bei den mit Abschrägungen versehenen Federn handelt es sich somit um Abschrägungen aufgrund von auf Gehrung aneinander anliegenden Federn. Alternativ kann anstelle einer Abschrägung die Feder auch verkürzt sein.

Wie auch bei den Verbindungselementen können die Federn bis zu den Stirnseiten bzw. Stirnkanten des Abschlusselements laufen und es kann sich hierbei um einen eckigen, insbesondere quaderförmigen und im Querschnitt quadratischen Grundkörper handeln. Allerdings können auch die Abschlusselemente überstehende Eckbereiche aufweisen.

Nachfolgend werden die Nutstruktur und die Federstruktur im Wesentlichen als Varianten in Form von Doppel-Nuten und -Federn beschrieben. Allerdings umfasst die Erfindung auch Varianten, die auf einer Stirnfläche oder einer Längsseite eines Verbindungs- oder Abschlusselements nebeneinander mehr als zwei Nuten oder Federn oder auch nur eine Nut und eine Feder aufweisen.

In einer weiteren vorteilhaften Ausgestaltung der Erfindung ist das Möbel mit einer Mehrzahl von Verbindungselementen und einem von diesen eingefasstem Flächenelement versehen, wobei zumindest ein Verbindungselement einen an die Feder anschließenden Bereich aufweist, dessen Länge V der Querschnittsbreite des Grundkörpers des Verbindungs- oder Abschlusselements entspricht. Hierdurch wird dann umlaufend um das Flächenelement ein gleich langer Rand erzeugt.

Ein Magnet des Verbindungselements bzw. des Flächenelements ist insbesondere von seiner Querschnittsbreite her kleiner ausgebildet als das die Breite V des Verbindungselements. Beispielsweise kann der Magnet vorzugsweise zylindrisch ausgebildet sein.

Vorzugsweise ist ein mit zumindest einer Rolle versehenes, bodenseitiges anzuordnendes Möbelelement mit einer Doppel-Nut zum Anordnen weiterer Möbelelemente versehen, wobei in dem Steg zwischen den beiden Nuten zumindest ein Magnet angeordnet ist. Gleichzeitig ist die Doppel-Nut insbesondere auf einer der Rolle gegenüberliegende Seite des dann flächig ausgebildeten Möbelelements angeordnet.

Mehrere mit Rollen versehene Möbelelemente können mit Steghölzern verbunden sein, die mit einer Doppel-Nut versehen sind, wobei in dem Steg zwischen den beiden Nuten zumindest ein Magnet angeordnet ist. Somit kann auch ein für Möbel tragfähiges und bewegbares Basiselement geschaffen werden, auf dem der eigentlich für Präsentationszwecke vorgesehene Teil des Möbels angeordnet und mittels der Rollen von einer Position zur nächsten bewegt werden kann.

Weitere Vorteile und Einzelheiten der Erfindung sind der nachfolgenden Figurenbeschreibung zu entnehmen. In den schematischen Abbildungen der Figuren zeigt:
- Fig. 1: ein Ausführungsbeispiel eines erfindungsgemäßen Möbels,
- Fig. 2: eine Explosionsdarstellung eines weiteren erfindungsgemäßen Ausführungsbeispiels,
- Fig. 3: zwei Schnittdarstellungen durch einen Teil eines erfindungsgemäßen Gegenstands,
- Fig. 4: Teilansichten von Möbelelementen eines weiteren erfindungsgemäßen Gegenstands
- Fig. 5 a) bis h): Schnittdarstellungen von Möbelelementen weiterer erfindungsgemäßer Gegenstände,
- Fig. 6 a) bis I): Beispiele für Verbindungselemente von erfindungsgemäßen Möbeln,
- Fig. 7: eine perspektivische Darstellung eines Möbelelements,
- Fig. 8: eine Übersicht über Größen von erfindungsgemäßen Präsentationselementen.

Einzelne technische Merkmale der nachbeschriebenen Ausführungsbeispiele können auch in Kombination mit vorbeschriebenen Ausführungsbeispielen sowie den Merkmalen des unabhängigen Anspruchs und etwaiger weiterer Ansprüche zu erfindungsgemäßen Gegenständen kombiniert werden. Sofern sinnvoll, werden funktional gleichwirkende Elemente mit identischen Bezugsziffern versehen.

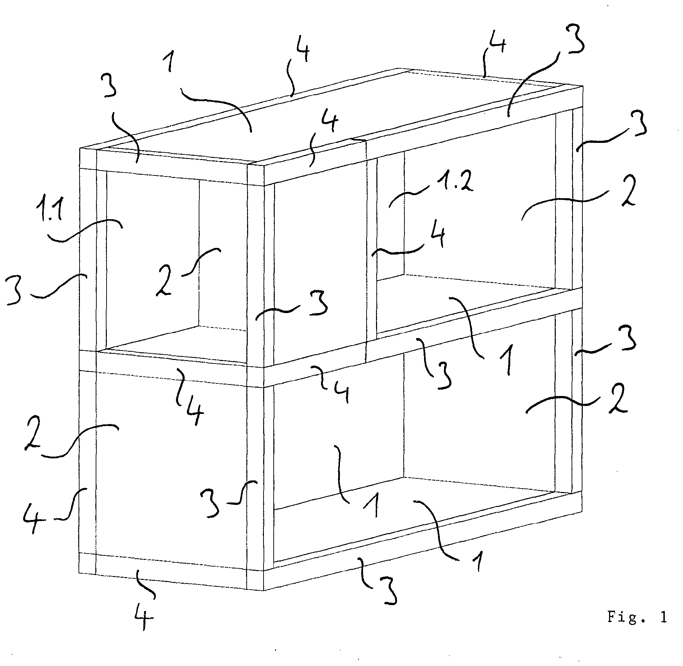

Ein erfindungsgemäßes Möbel, welches vorliegend als Präsentationsmöbel und insbesondere als Messeregalsystem verwendbar ist, weist gemäß Fig. 1 eine Reihe von verschiedenen Flächen, Verbindungs- und Abschlusselementen auf, wobei Flächenelemente mit Verbindungs- bzw. Abschlusselementen über eine auf Seiten von Flächenelementen vorhandene Nutstruktur in Form von Doppel-Nuten und über eine auf Seiten von Verbindungs- und Abschlusselementen vorhandene Federnstruktur in Form einer Doppelfeder sowie über jeweilige Magnete verbunden sind.

Vorliegend sind vier identische Flächenelemente 1 zur Ausbildung eines zweistockigen Möbels verwendet worden. Ein weiteres Flächenelement 1.1 bildet mit einem Flächenelement 1.2 eine weitere Rückwand aus. Die beiden Stockwerke des Möbels werden weiterhin von identisch ausgebildeten weiteren Flächenelementen 2 begrenzt. Abschlusselemente 3 decken die ansonsten für einen Betrachter sichtbaren Doppel-Nuten der Flächenelemente ab. Als Abschlusselemente sind hierbei diejenigen Elemente definiert, lediglich auf einer Seite eine Doppel-Feder (oder alternativ eine Doppel-Nut) aufweisen und auf den weiteren Seiten keine funktionalen Elemente, insbesondere keine Beschläge oder Doppel-Nut oder Doppel-Federn aufweisen, oder die nicht zur Verbindung zweier Flächenelemente dienen. Verbindungselemente 4 dienen der Verbindung von Flächenelementen 1 oder 2.

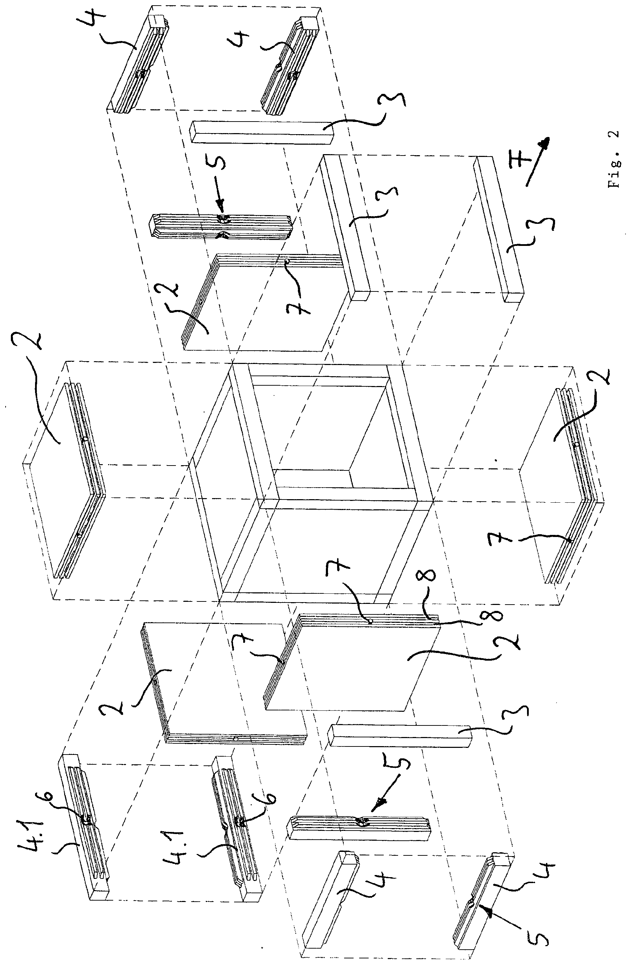

In dem einfacher bauenden Ausführungsbeispiel der Fig. 2 sind die Flächen- und Verbindungselemente explosionsartig dargestellt. Hierbei sind insgesamt fünf Flächenelemente 2 über Verbindungselemente 4 miteinander verbunden, wobei die hinteren Verbindungselemente 4.1 endseitig an die abgeschrägten Enden der Federn angrenzende Bereiche aufweisen, deren Breite der Querschnittsbreite des quaderförmigen Grundkörpers entspricht, um die entsprechend angrenzenden Verbindungs- oder Abschlusselemente abzudecken.

Die Verbindungselemente 4 haben genauso wie die Verbindungselemente 4.1 an aneinander angrenzenden Seiten eine Doppel-Feder, mit der in entsprechende Doppel-Nut der Flächenelemente eingegriffen wird. Abschlusselemente 3 haben lediglich zu der abzudeckenden Seite hin eine Doppel-Nut und sind auf der zum Betrachter gerichteten Seite, vorliegend also in Richtung F nut- und federlos ausgebildet. In Bereichen 5 um die Magneten der Verbindungs- bzw. Abschlusselemente herum sind alle Doppel-Federn mit Ausnehmungen versehen, die dem besseren Heranführen der Verbindungs- und Abschlusselemente an die korrekte Position an einer Stirnseite eines Flächenelements dienen. Magneten 6 der Verbindungs- und Abschlusselemente lassen sich optimal an Magneten 7 der Flächenelemente positionieren. Diese Magnete 7 sind in einem Steg zwischen zwei Nuten 8 eines jeweiligen Flächenelements angeordnet.

Abschrägungen der Federn der Verbindungselemente 4, die beispielsweise im vorliegenden Fall auf der rechten Seite des Möbelstücks anzuordnen sind, stoßen mit den nicht näher dargestellten Federn des mit 3 bezifferten Abschlusselements an dem angrenzenden Flächenelement auf Gehrung aufeinander.

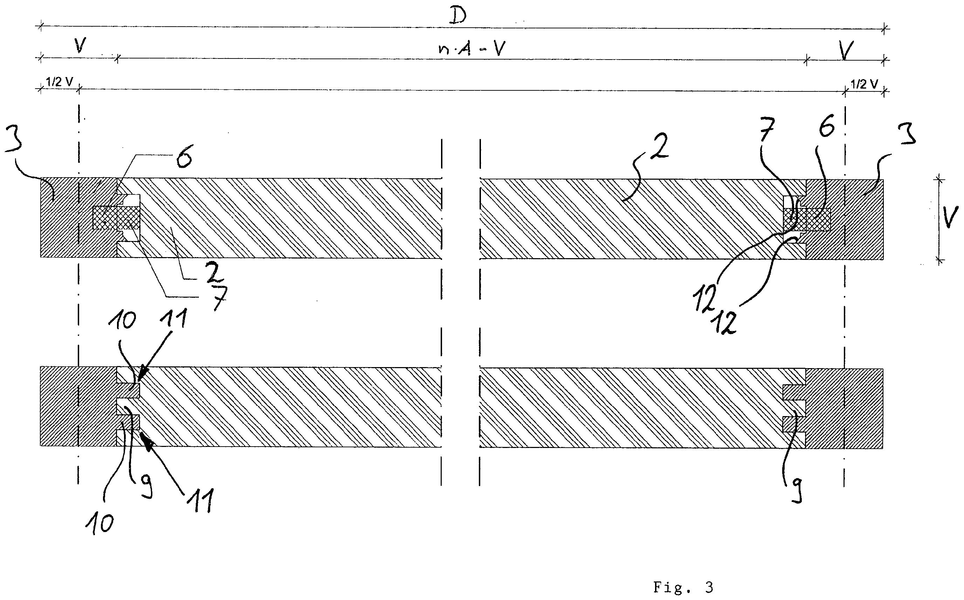

In der oberen Schnittdarstellung der Fig. 3 ist die Verbindung von zwei Abschlusselementen 3 mit einem Flächenelement dargestellt. Der Schnitt verläuft hierbei auf Höhe der Magneten. Magneten 6 liegen dicht an Magneten 7 an. Einander anziehende Pole der Magneten sind einander zugewandt. Die Magnete 7 sind hierbei erkennbar breiter ausgebildet als ein mittlerer Steg 9, der zur Ausbildung von zwei mit Federn 10 gefüllten Nuten 11 dient. Entsprechend weisen die Federn 10 Ausnehmungen mit Führungsflächen 12 auf, die einer Positionierung des Magneten 7 an dem Magneten 6 dienen. Unmittelbar angrenzend an den Magneten 6 ist die Führungsfläche abgewinkelt zur Ausbildung eines im vorliegenden Fall zylinderförmigen Einlaufbereiches an den Magneten 6.

Die Gesamtbreite D ergibt sich hierbei zu n·A + V, wobei n·A - V die Breite des Flächenelements 2 ist. Der Grundkörper des Abschlusselements ist vorliegend quaderförmig und im Querschnitt quadratisch mit Kantenlängen V ausgebildet.

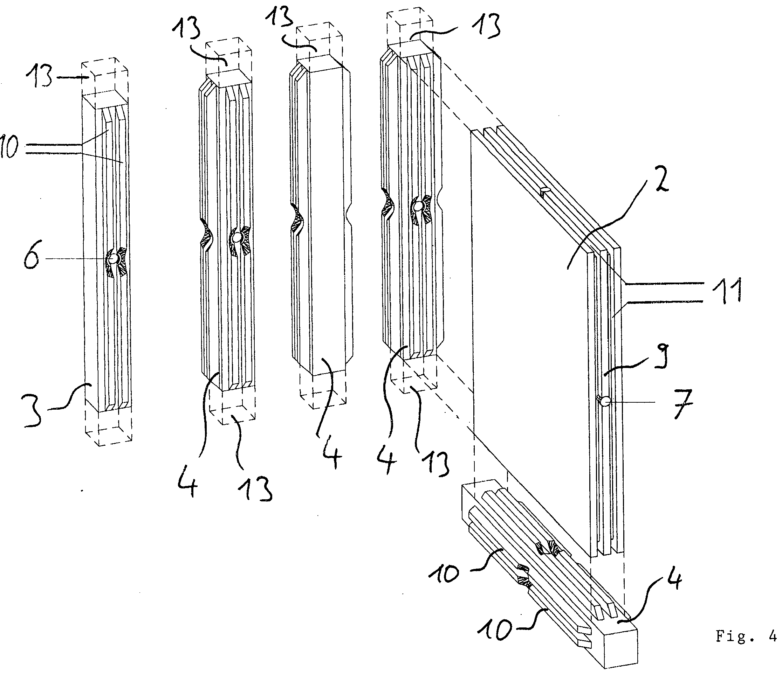

Die größere Breite des Magneten 7 im Vergleich zu der Breite des von diesem unterbrochenen Steges 9 ist auch in der Fig. 4 ersichtlich. Der Magnet ragt in den von den Nuten 11 gebildeten Zwischenraum hinein und verkleinert diesen.

Während ein an einer unteren Stirnseite des Flächenelements 2 anzuordnender Verbinder 4 auf insgesamt drei Seiten Doppel-Federn, gebildet von einzelnen Federn 10, aufweist, sind zwei weitere Varianten eines Verbindungselements 4, gezeigt in derselben Figur, jeweils nur auf zwei Seiten mit einer Doppel-Feder versehen. Darüber hinaus weisen diese weiteren Verbindungselemente 4 nicht die an die abgeschrägten Federn angrenzenden und entsprechend lediglich gestrichelt dargestellten Bereiche 13 auf. Diese sind ebenfalls bei der auf drei Seiten mit einer Doppel-Feder versehenen Verbinder 4, der in der Figur 4 entlang einer gestrichelten Linie an die hintere Stirnseite des Flächenelements 2 ankuppeln kann, ausgelassen.

Gleiches gilt für ein Abschlusselement 3, welches in der Figur links gezeichnet ist.

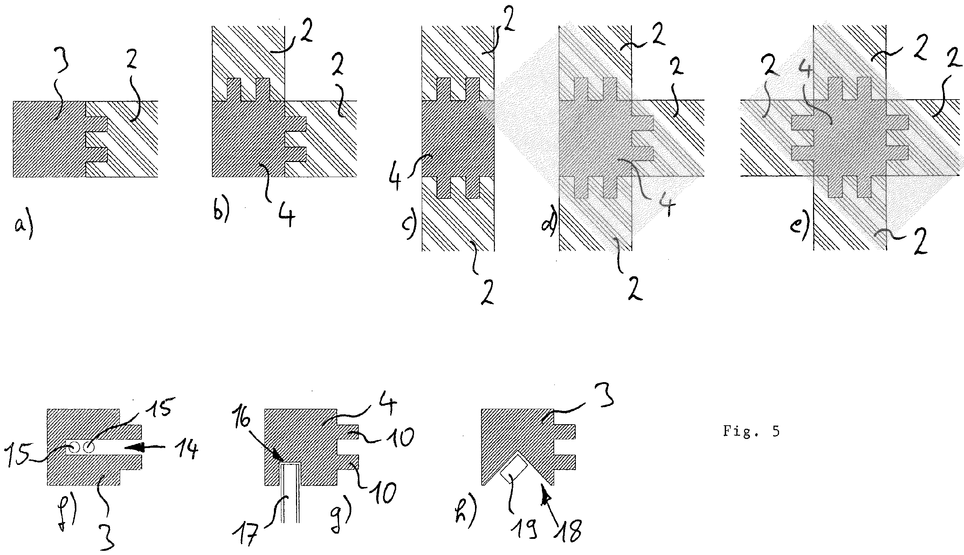

Die einzelnen insbesondere Präsentationsmöbelelemente ausgebildete Möbelelemente, die als Verbindungs- oder Abschlusselemente ausgebildet sind, können entsprechend unterschiedliche Querschnittsformen aufweisen (Fig. 5 a) bis h)). Ein Abschlusselement 3 weist wie bereits vorbeschrieben lediglich eine Doppel-Nut zur Verbindung mit einem Flächenelement 2 auf (Fig. 5 a)).

Zwei Flächenelemente 2 können über ein einen Eckverbinder ausbildendes Verbindungselement 4 verbunden werden, wobei das Verbindungselement 4 dann auf zwei aneinander angrenzenden Seiten eine Doppel-Nut aufweist (Fig. 5 b))

Doppel-Nuten auf gegenüberliegenden Seiten eines Verbindungselements 4 dienen zur Ausbildung von bündig ineinander übergehenden Oberflächen zweier benachbarter Flächenelemente 2 (Fig. 5 c)).

Ein zur Herstellung einer T-förmigen Verbindung ausgebildetes Verbindungselement 4 weist auf drei Seiten Doppel-Nuten auf (Fig. 5 d)). Ein Verbindungselement4 mit Doppel-Nuten auf seinen vier rechtwinklig aneinanderstoßenden Seiten ist zur Herstellung einer kreuzförmigen Verbindung benachbarter und über Eck angebundener Flächenelemente 2 ausgebildet (Fig. e)).

Ein Abschlusselement 3 weist eine Kabelnut 14 auf, in der stromführende Leitungen 15 angeordnet sind (Fig. 5 f)).

Ein Verbindungselement 4 weist gemäß Fig. 5 g) auf einer Seite eine mit Federn 10 ausgebildete Doppel-Feder auf, während auf einer weiteren Seite eine Nut 16 zur Anordnung einer vorzugsweise als Glasplatte 17 ausgebildeten Funktionselements vorhanden ist.

Schließlich umfasst das Abschlusselement 3 nach Fig. 5 h) eine Ausnehmung 18, in die ein vorzugsweise als LED-Leiste ausgebildetes Leuchtmittel 19 eingebracht ist. Diese LED-Leiste kann beispielsweise über angrenzende Abschlusselemente 3 gemäß Fig. 5 f) mit Strom versorgt werden.

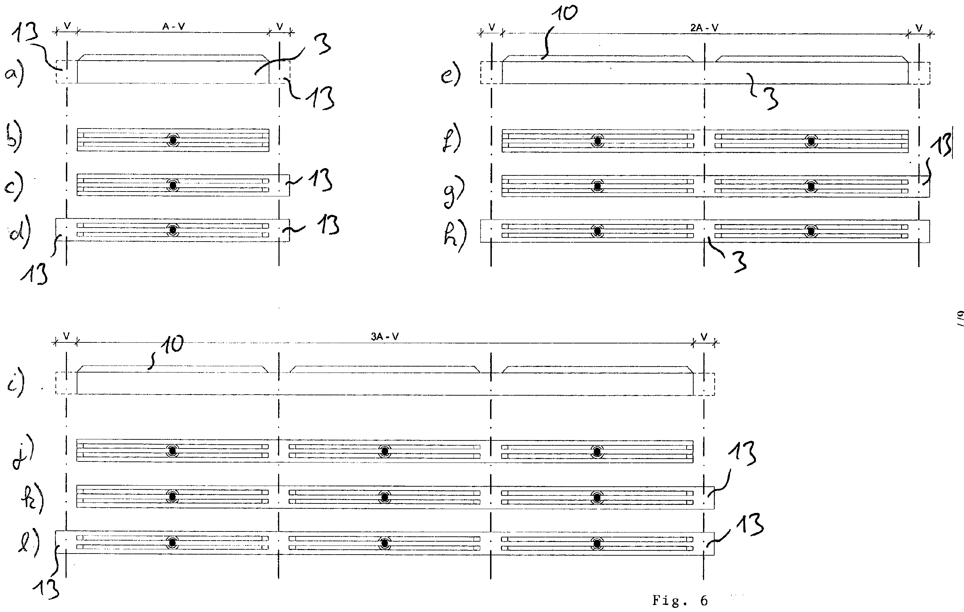

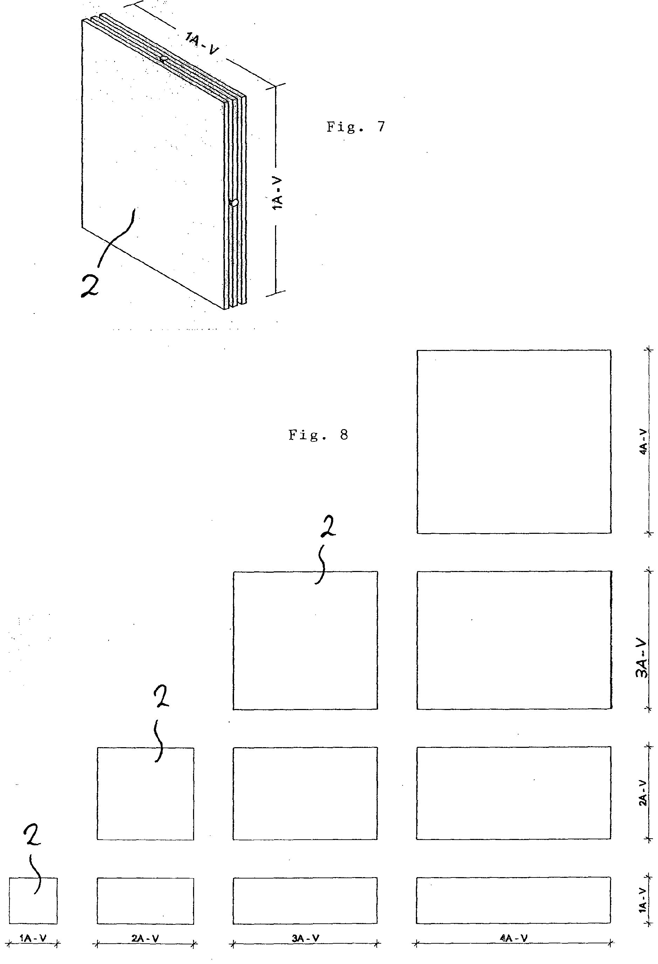

Ausführungsbeispiele von Abschlusselementen 3 für unterschiedliche Modulgrößen, die einen modularen Aufbau und die Anbindung an unterschiedlich große Flächenelemente ermöglichen, sind in den Fig. 6 a) bis 6l) gezeigt. Die dort gezeigten Abschlusselemente unterscheiden sich insbesondere hinsichtlich eines an den mit Nuten versehenen Bereich angrenzenden Bereiches 13. Wesentlich ist bei allen in den Figuren 6 und 8 dargestellten Ausführungsbeispielen, dass bei Anordnung von jeweiligen Verbindungs- bzw. Abschlusselementen an zugehörigen Flächenelementen die Positionen der Magnete zueinander passen. Entsprechend ist ein in der Fig. 6 a) gezeigtes Abschlusselement 3 mit zwei gestrichelt dargestellten angrenzenden Bereichen versehen, Fig. 6 b) zeigt ein solches Abschlusselement in einer Seitenansicht ohne die Bereiche 13 (Länge A - V), Fig. 6 c) ein Beispiel mit nur einem angrenzenden Bereich 13 (Länge A), während sich die Länge des Abschlusselements gemäß Fig. 6 d) zu A + V ergibt.

Ein nächst längeres Abschlusselement weist in der Seitenansicht gemäß Fig. 6 e) eine Grundlänge von 2 A - V auf (vgl. Fig. 6 f)). Wobei hier die eine Doppel-Feder ausbildenden Federn 10 im mittleren Bereich unterbrochen sind, um die Anordnung von weiteren Elementen zu ermöglichen. Entsprechend ist die von den Federn gebildete Ausnehmung mindestens so breit wie eine Querschnittsbreite eines Grundkörpers eines angrenzenden Verbindungselements. Um eine Anordnung auf Gehrung zu ermöglichen, sind die Ausnehmungen ebenso wie die Enden der Federn abgeschrägt.

Die Ausführungsbeispiele gemäß der Fig. 6 g) und h) unterscheiden sich ebenfalls wieder durch die an die Federn angrenzenden Bereiche 13, wobei die Abschlussleiste gemäß Fig. 6 g) eine Länge von 2 A und das Ausführungsbeispiel gemäß der Fig. 6 h) eine Länge von 2 A + V aufweist.

Anstelle von Abschlussleisten 3 kann es sich bei den Ausführungsbeispielen der Fig. 6 a) bis 6 l) auch um Verbindungselemente handeln, die zumindest zwei Seiten Doppel-Federn aufweisen. Die Anordnung mehrerer Magnete auf einem Verbindungs- oder Abschlusselement Seite erfolgt unter einem mittleren Abstand A (gerechnet von Mittelachse zu Mittelachse der benachbarten Magnete).

Ein Abschlusselement mit einer Grundlänge von 3 A - V ist in der Fig. 6 i) in einer Seitenansicht gezeigt. Entsprechend dem modularen Aufbau des erfindungsgemäßen Möbels sind hier zwei Bereiche von unterbrochenen Stegen 10 vorhanden, die der Anbindung von Abschluss- oder Verbindungselementen dienen.

Das Grundelement dieses nächst längeren Abschlusselements weist eine Länge von 3 A - V auf (Fig. 6 j)). Entsprechend sind die um einen bzw. zwei Bereiche 13 verlängerten Ausführungsbeispiele gemäß der Figuren 6 k) und 6 l) mit einer Länge von 3 A bzw. 3 A + V versehen.

Als Basisgröße für Flächenelemente ist ein Flächenelement 2 mit einer Kantenlänge von (1) A - V vorgesehen (Fig. 7).

Ausgehend von dieser Größe sind in der Fig. 8 entsprechend weitere Größen von Flächenelementen 2 mit Größen n·A - V für die jeweiligen Kantenlängen dargestellt, wobei n aus der Menge der ganzen Zahlen ({1,2,3, ...}) gebildet wird.

Durch die Verbindungs-, Abschluss- und Flächenelemente der Figuren 5 - 7 lassen sich eine Vielzahl von erfindungsgemäßen, werkzeuglos auf- und abbaubaren Möbeln schaffen, die beispielsweise auf Messen, im Ladenbau, bei Ausstellungen, bei Ladeneinrichtungen, für Events, für visuelles Marketing, für die Retail-Technologie und/oder für den persönlichen Wohngebrauch verwendet werden können.

## Patentansprüche

1. Möbel, insbesondere Präsentationsmöbel für Waren, in Form eines modular aufbaubaren Regals oder Schranks, umfassend eine Mehrzahl an Möbelelementen in Form von Flächenelementen (1,2) und von Verbindungselementen (4), wobei die Verbindungselemente (4) an Schmalseiten der Flächenelemente (1,2) ansetzbar sind, wobei eine werkzeuglos lösbare Verbindung an den Schmalseiten mit einer Einführrichtung parallel zur flächigen Erstreckung des Flächenelements und senkrecht zur Schmalseite des Flächenelements erfolgt und wobei zwei Flächenelemente (2,1) über nur ein Verbindungselement (4) verbunden sind, **dadurch gekennzeichnet, dass** die werkzeuglos lösbare Verbindung an den Schmalseiten nebeneinander oder unmittelbar über Eck angeordneter Flächenelemente über eine in eine Nutstruktur einzuführende Federstruktur, vorzugsweise über eine in eine Nut einzuführende Feder oder über eine in eine zumindest als Doppel-Nut ausgebildete Mehrfach-Nut einzuführende zumindest als Doppel-Feder ausgebildete Mehrfach-Feder, erfolgt, wobei die Möbelelemente (1,2,4) über die Nut-Feder-Verbindung quer zur flächigen Erstreckung des Flächenelements (1,2) sowie zusätzlich entgegen der Einführrichtung über die Wechselwirkung wenigstens eines auf Seiten eines Möbelelements angeordneten Magneten (6) und wenigstens eines auf Seiten eines angrenzenden Möbelelements angeordneten magnetisch anziehbaren weiteren Teils festgelegt sind.

2. Möbel nach Anspruch 1, **dadurch gekennzeichnet, dass** das magnetisch anziehbare weitere Teil ein Magnet (7) ist und sowohl Verbindungselement (4) wie auch Flächenelement (1,2) jeweils zumindest einen Magneten (6,7) aufweisen, durch die sich die beiden Möbelelemente anziehen.

3. Möbel nach Anspruch 1 oder 2, **dadurch gekennzeichnet, dass** das Verbindungselement (4) auf zumindest einer Seite eine Federstruktur aufweist.

4. Möbel nach Anspruch 3, **dadurch gekennzeichnet, dass** die Federstruktur zu ihren Enden hin abgeschrägt ist

5. Möbel nach einem der vorherigen Ansprüche 3 oder 4, **dadurch gekennzeichnet, dass** das Verbindungselement (4) einen eckigen, insbesondere quaderförmigen Grundkörper aufweist, wobei der Grundkörper im Querschnitt vorzugsweise quadratisch ausgebildet ist.

6. Möbel nach einem der vorherigen Ansprüche 3 bis 5, **dadurch gekennzeichnet, dass** das Verbindungselement (4) auf zumindest zwei Seiten eine Federstruktur aufweist und/oder der Magnet (6) auf einer Seite des Verbindungselements (4) symmetrisch zu Federstruktur angeordnet ist

7. Möbel nach einem der vorherigen Ansprüche 3 bis 6, **dadurch gekennzeichnet, dass** der Magnet (6) in den Grundkörper eingelassen ist.

8. Möbel nach Anspruch 7, **dadurch gekennzeichnet, dass** um den Magneten die Federstruktur zumindest eine zum Magneten (6) hin verlaufende Ausnehmung aufweist, wobei insbesondere die die Ausnehmung ausbildenden Nut-Oberflächen als Führungsflächen (12) ausgebildet ist.

9. Möbel nach einem der vorherigen Ansprüche 3 bis 8, **dadurch gekennzeichnet, dass** das Verbindungselement (4) mit einer Kabelnut (14) versehen ist, in der eine stromführende Leitung (15) angeordnet ist.

10. Möbel nach einem Anspruch 9, **dadurch gekennzeichnet, dass** an zumindest einer der Stirnseiten des Verbindungselements (4) Anschlussmittel zur Verbindung mit einer stromführenden Leitung (14) vorhanden sind.

11. Möbel nach einem der vorherigen Ansprüche, **dadurch gekennzeichnet, dass** das Möbelelement mit einem vorzugsweise als LED-Leiste ausgebildeten Leuchtmittel (19) versehen ist

12. Möbel nach einem der vorherigen Ansprüche 3 bis 11, **dadurch gekennzeichnet, dass** das Verbindungselement (4) einen Beschlag für eine Tür aufweist.

13. Möbel nach einem der vorherigen Ansprüche, **dadurch gekennzeichnet, dass** das Flächenelement (1,2) eine eckige, insbesondere quaderförmige Grundform aufweist.

14. Möbel nach einem der vorherigen Ansprüche, **dadurch gekennzeichnet, dass** das Flächenelement (1,2) die Nutstruktur auf wenigstens einer, vorzugsweise auf allen seinen Schmalseiten aufweist.

15. Möbel nach Anspruch 14, **dadurch gekennzeichnet, dass** ein zentraler, zwischen Nuten (11) befindlicher Steg (9) mit einem Magneten (7) versehen ist.

16. Möbel nach Anspruch 15, **dadurch gekennzeichnet, dass** der Magnet (7) breiter als der Steg (9) ist.

17. Möbel nach einem der vorherigen Ansprüche, **dadurch gekennzeichnet, dass** das Flächenelement (1,2) zumindest teilweise durchsichtig ausgebildet ist.

18. Möbel nach einem der vorherigen Ansprüche, **dadurch gekennzeichnet, dass** ein Abschlusselement (3) vorhanden ist, welches auf einer zu einem Betrachter hin zu richtenden Seite nut- und federlos ausgebildet ist.

19. Möbel nach Anspruch 18, **dadurch gekennzeichnet, dass** das Abschlusselement (3) eine Federstruktur aufweist, die zu den Enden der Federn hin vorzugsweise abgeschrägt ist.

20. Möbel nach Anspruch 18 oder 19, **gekennzeichnet durch** zumindest einen Magneten, der symmetrisch zu der Federstruktur angeordnet ist.

21. Möbel nach einem der vorherigen Ansprüche, **dadurch gekennzeichnet, dass** Verbindungs-, Abschluss- oder Flächenelement (1,2,3,4) eine Nut (16) und/oder eine Ausnehmung zur Anordnung eines Funktionselement, insbesondere einer Glasplatte, aufweisen.

22. Möbel nach einem der vorherigen Ansprüche mit einer Mehrzahl von Verbindungselementen (4) und einem von diesen eingefasstem Flächenelement (2), **dadurch gekennzeichnet, dass** ein Verbindungs- oder Abschlusselement (3, 4) einen an die Federstruktur anschließenden Bereich (13) aufweist, dessen Länge V der Querschnittsbreite des Grundkörpers des Verbindungs- oder Abschlusselements (3,4) entspricht.

23. Möbel nach einem der vorherigen Ansprüche unter Einschluss von Anspruch 2, **dadurch gekennzeichnet, dass** die Magneten (6,7) eine geringere Querschnittsbreite aufweisen als das Verbindungselement (4) und vorzugsweise zylindrisch ausgebildet sind.

24. Möbel nach einem der vorherigen Ansprüche, **dadurch gekennzeichnet, dass** ein mit zumindest einer Rolle versehenes, bodenseitig anzuordnendes Möbelelement mit einer Nutstruktur zum Anordnen weiterer Möbelelemente versehen ist, wobei in dem Steg zwischen den beiden Nuten zumindest ein Magnet angeordnet ist

25. Möbel nach Anspruch 24, **dadurch gekennzeichnet, dass** mit Rollen versehene Möbelelemente über mit einer Nutstruktur versehene Steghölzer verbunden sind, wobei vorzugsweise in dem Steg vorzugsweise zwischen den beiden Nuten zumindest ein Magnet angeordnet ist.

## Claims

1. Furniture, in particular display furniture for goods, in the form of a modular construction shelf or cabinet, comprising a plurality of furniture elements in the form of surface elements (1, 2) and of connection elements (4), wherein the connection elements (4) can be attached to narrow sides of the surface elements (1, 2), wherein a connection that can be disconnected without tools is made at the narrow sides with an insertion direction parallel to the spatial expansion of the surface element and vertical to the narrow side of the surface element, and wherein two surface elements (2, 1) are connected with just one connection element (4), **characterised in that** the connection that can be disconnected without tools is realised at the narrow sides of surface elements arranged next to each other at a direct right angle by means of a tongue structure to be inserted into a groove structure, preferably via a tongue to be inserted into a groove or via a multi-tongue designed at least as a double tongue to be inserted into a multi-groove designed at least as a double groove, wherein the furniture elements (1, 2, 4) are fixed by means of the groove/tongue connection transverse to the spatial expansion of the surface element (1, 2) as well as additionally against the insertion direction by means of an interaction of at least one magnet (6) arranged on the part of the furniture element and at least one magnetically attractable further part arranged on the part of a neighbouring furniture element.

2. Furniture according to claim 1, **characterised in that** the magnetically attractable further part is a magnet (7) and has a connection element (4) as well as a surface element (1, 2), each having at least one magnet (6, 7), with which the two furniture elements are attracted towards each other.

3. Furniture according to claim 1 or 2, **characterised in that** the connection element (4) has a tongue structure on at least one side.

4. Furniture according to claim 3, **characterised in that** the tongue structure is chamfered towards its ends.

5. Furniture according to one of the preceding claims 3 or 4, **characterised in that** the connection element (4) has an angular, in particular cuboid-shaped base body, wherein the base body is preferably of a square design in its cross-section.

6. Furniture according to one of the preceding claims 3 to 5, **characterised in that** the connection element (4) has a tongue structure on at least two sides and/or the magnet (6) is arranged symmetrically to the tongue structure on the side of the connection element (4).

7. Furniture according to one of the preceding claims 3 to 6, **characterised in that** the magnet (6) is recessed into the base body.

8. Furniture according to claim 7, **characterised in that** the tongue structure has at least one recess extending towards the magnet (6) around said magnet, wherein the groove surfaces forming the recess is designed as guide surfaces (12).

9. Furniture according to one of the preceding claims 3 to 8, **characterised in that** the connection element (4) is equipped with a cable groove (14), in which a current-carrying cable (15) is arranged.

10. Furniture according to a claim 9, **characterised in that** connection means for connection with a current-carrying cable (14) are provided on at least one of the facing sides of the connection element (4).

11. Furniture according to one of the preceding claims, **characterised in that** the furniture element is equipped with a light (19) preferably designed as an LED strip.

12. Furniture according to one of the preceding claims 3 to 11, **characterised in that** the connection element (4) has a fitting for a door.

13. Furniture according to one of the preceding claims, **characterised in that** the surface element (1, 2) has an angular, in particular cuboid-shaped base form.

14. Furniture according to one of the preceding claims, **characterised in that** the surface element (1, 2) has the groove structure on at least one, preferably on all of its narrow sides.

15. Furniture according to claim 14, **characterised in that** a central bridge (9) located between grooves (11) is equipped with a magnet (7).

16. Furniture according to claim 15, **characterised in that** the magnet (7) is wider than the bridge (9).

17. Furniture according to one of the preceding claims, **characterised in that** the surface element (1, 2) is designed at least partly transparent.

18. Furniture according to one of the preceding claims, **characterised in that** an end element (3) is provided, which is of a groove- and tongue-free design on a side to be directed towards an observer.

19. Furniture according to claim 18, **characterised in that** the end element (3) has a tongue structure that is preferably chamfered towards the ends of the tongues.

20. Furniture according to claim 18 or 19, **characterised by** at least one magnet arranged symmetrical to the tongue structure.

21. Furniture according to one of the preceding claims, **characterised in that** connection, end or surface elements (1, 2, 3, 4) have a groove (16) and/or a recess for arranging a function element, in particular a glass plate.

22. Furniture according to one of the preceding claims with a plurality of connection elements (4) and a surface element (2) framed by the same, **characterised in that** a connection or end element (3, 4) has an area (13) that follows on from the tongue structure, the length V of the same equals the cross-section width of the base body of the connection or end element (3, 4).

23. Furniture according to one of the preceding claims, including claim 2, **characterised in that** the magnets (6, 7) have a smaller cross-section width than the connection element (4) and are preferably designed cylindrically.

24. Furniture according to one of the preceding claims, **characterised in that** a furniture element to be arranged on the floor and equipped with at least one castor is equipped with a groove structure for arranging further furniture elements, wherein at least one magnet is arranged in the bridge between the two grooves.

25. Furniture according to claim 24, **characterised in that** furniture elements equipped with castors are connected by means of dibbles equipped with a groove structure, wherein at least one magnet is preferably arranged in the bridge between the two grooves.

## Revendications

1. Meuble, en particulier meuble de présentation pour des marchandises, sous la forme d'une étagère ou d'une armoire qui peut être assemblée de manière modulaire, comprenant une pluralité d'éléments de meuble sous la forme d'éléments de surface (1, 2) et d'éléments de liaison (4), dans lequel les éléments de liaison (4) peuvent être appliqués sur des côtés étroits des éléments de surface (1, 2), dans lequel une liaison détachable sans outil au niveau des côtés étroits est effectuée avec une direction d'insertion parallèlement à l'extension en plan de l'élément de surface et perpendiculairement au côté étroit de l'élément de surface et dans lequel deux éléments de surface (2, 1) sont reliés par un seul élément de liaison (4), **caractérisé en ce que** la liaison détachable sans outil au niveau des côtés étroits d'éléments de surface disposés les uns à côté des autres ou directement dans un coin est effectuée par le biais d'une structure à ressort à introduire dans une structure à rainure, de préférence par le biais d'un ressort à introduire dans une rainure ou par le biais d'un ressort multiple conçu au moins sous la forme d'un ressort double à introduire dans une rainure multiple conçue au moins sous la forme d'une rainure double, dans lequel les éléments de meuble (1, 2, 4) sont fixés par le biais de la liaison rainure-ressort transversalement à l'extension en plan de l'élément de surface (1, 2) et en outre dans le sens inverse à la direction d'insertion par l'interaction d'au moins un aimant (6) disposé sur des côtés d'un élément de meuble et d'au moins une autre partie qui peut être attirée magnétiquement et qui est disposée sur des cotés d'un élément de meuble adjacent.

2. Meuble selon la revendication 1, **caractérisé en ce que** l'autre partie qui peut être attirée magnétiquement est un aimant (7) et aussi bien l'élément de liaison (4) que l'élément de surface (1, 2) présentent chacun au moins un aimant (6, 7) grâce auquel les deux éléments de meuble s'attirent.

3. Meuble selon la revendication 1 ou 2, **caractérisé en ce que** l'élément de liaison (4) présente une structure à ressort sur au moins un côté.

4. Meuble selon la revendication 3, **caractérisé en ce que** la structure à ressort est inclinée vers ses extrémités.

5. Meuble selon une des revendications précédentes 3 ou 4, **caractérisé en ce que** l'élément de liaison (4) présente un corps de base angulaire, en particulier parallélépipédique, dans lequel le corps de base est de préférence de forme carrée en coupe transversale.

6. Meuble selon une des revendications précédentes 3 à 5, **caractérisé en ce que** l'élément de liaison (4) présente une structure à ressort sur au moins deux côtés et/ou l'aimant (6) est disposé sur un côté de l'élément de liaison (4) symétriquement par rapport à la structure à ressort.

7. Meuble selon une des revendications précédentes 3 à 6, **caractérisé en ce que** l'aimant (6) est inséré dans le corps de base.

8. Meuble selon la revendication 7, **caractérisé en ce que**, autour de l'aimant, la structure à ressort présente au moins un évidement s'étendant vers l'aimant (6), dans lequel en particulier les surfaces de rainure formant l'évidement sont conçues sous la forme de surfaces de guidage (12).

9. Meuble selon une des revendications précédentes 3 à 8, **caractérisé en ce que** l'élément de liaison (4) est muni d'une rainure pour câble (14) dans laquelle est disposé un câble conducteur (15).

10. Meuble selon la revendication 9, **caractérisé en ce que**, au niveau d'au moins un des côtés frontaux de l'élément de liaison (4), des moyens de raccordement sont présents pour la liaison à un câble conducteur (14).

11. Meuble selon une des revendications précédentes, **caractérisé en ce que** l'élément de meuble est muni d'un moyen lumineux (19) conçu de préférence sous la forme d'une barrette à LED.

12. Meuble selon une des revendications précédentes 3 à 11, **caractérisé en ce que** l'élément de liaison (4) présente une ferrure pour une porte.

13. Meuble selon une des revendications précédentes, **caractérisé en ce que** l'élément de surface (1, 2) présente une forme de base angulaire, en particulier parallélépipédique.

14. Meuble selon une des revendications précédentes, **caractérisé en ce que** l'élément de surface (1, 2) présente la structure à rainure sur au moins un de ses côtés étroits, de préférence sur tous.

15. Meuble selon la revendication 14, **caractérisé en ce qu'**une traverse (9) centrale, située entre des rainures (11), est munie d'un aimant (7).

16. Meuble selon la revendication 15, **caractérisé en ce que** l'aimant (7) est plus large que la traverse (9).

17. Meuble selon une des revendications précédentes, **caractérisé en ce que** l'élément de surface (1, 2) est au moins en partie conçu transparent.

18. Meuble selon une des revendications précédentes, **caractérisé en ce qu'**un élément de terminaison (3) est présent et est conçu sans rainure ni ressort sur un côté à orienter vers un observateur.

19. Meuble selon la revendication 18, **caractérisé en ce que** l'élément de terminaison (3) présente une structure à ressort qui est de préférence inclinée vers les extrémités des ressorts.

20. Meuble selon la revendication 18 ou 19, **caractérisé par** au moins un aimant qui est disposé symétriquement par rapport à la structure à ressort.

21. Meuble selon une des revendications précédentes, **caractérisé en ce que** l'élément de liaison, de terminaison ou de surface (1, 2, 3, 4) présente une rainure (16) et/ou un évidement pour disposer un élément fonctionnel, en particulier une plaque de verre.

22. Meuble selon une des revendications précédentes comprenant une pluralité d'éléments de liaison (4) et un élément de surface (2) encadré par ceux-ci, **caractérisé en ce qu'**un élément de liaison ou de terminaison (3, 4) présente une zone (13) qui est raccordée à la structure à ressort et dont la longueur V correspond à la largeur en coupe transversale du corps de base de l'élément de liaison ou de terminaison (3, 4).

23. Meuble selon une des revendications précédentes en incluant la revendication 2, **caractérisé en ce que** les aimants (6, 7) présentent une largeur en coupe transversale inférieure à l'élément de liaison (4) et sont de préférence de forme cylindrique.

24. Meuble selon une des revendications précédentes, **caractérisé en ce qu'**un élément de meuble à disposer côté fond et muni d'au moins une roulette est muni d'une structure à rainure pour disposer d'autres éléments de meuble, dans lequel au moins un aimant est disposé dans la traverse entre les deux rainures.

25. Meuble selon la revendication 24, **caractérisé en ce que** les éléments de meuble munis de roulettes sont reliés par le biais de pièces de bois de traverse munies d'une structure à rainure, dans lequel au moins un aimant est disposé de préférence dans la traverse entre les deux rainures.
